# EUROPEAN PATENT APPLICATION

(11) **EP 2 151 903 A1**
(43) Date of publication of application: **10.02.2010**
(21) Application number: 08014168.2
(22) Date of filing: 08.08.2008
(51) Int. Cl.: H02G 11/02, H02G 1/00

(54) **Cable package, as well as method for installing a cable end with the aid of such a cable package**

(71) Applicant: Braun GmbH, 61476 Kronberg im Taunus (DE)
(72) Inventor: Bub, Heiko, 64390 Erzhausen (DE); Schormair, Hauke, 64347 Griesheim (DE); Meyer, Hans-Jürgen, 65201 Wiesbaden (DE); Göbel, Sebastian, 65830 Kriftel (DE)

(57) **Abstract**

The present invention pertains to a cable package with a package container that serves for accommodating a cable to be packaged and is at least sectionally realized in a dimensionally stable fashion. The invention furthermore pertains to a method for installing a cable end on a connector such as a plug, a power supply unit and the like with the aid of such a cable package. According to the invention, the cable package is **characterized in that** holding means for holding a cable end and/or a connector connected to the cable end in a cable processing position are provided on a wall of the package container that is at least sectionally realized in a dimensionally stable fashion. This makes it possible to move the cable end or a connector installed thereon into a defined position, for example, relative to an installation head or probe by correspondingly positioning the cable package that can be taken hold of in a much simpler and more precise fashion than a cable of undefined flexibility. In the aforementioned cable processing position, in which the cable end or a connector installed thereon is held, the cable end can be connected to said connector, preparations of the cable required for producing this connection can be carried out or the finished connection between the cable and the connector can be checked.

## Description

The present invention pertains to a cable package with a package container that serves for accommodating a cable to be packaged and is at least sectionally realized in a dimensionally stable fashion. The invention furthermore pertains to a method for installing a cable end on a connector such as a plug, a power supply unit and the like with the aid of such a cable package.

The automated processing of cables is still difficult and until now only realized to a limited degree with justifiable costs. It is particularly difficult to take hold of and exactly position flexible cables such as, for example, electric power cables with the grippers of a manipulating device, especially if the corresponding cable is delivered in the form of bulk material and more or less entangled.

In the manufacture of electric appliances, charging components or the like that are equipped with a permanently attached power cable or of plug-in power supply units that feature a permanently attached cable for being connected to an end device, a large portion of the power cable installation needs to be carried out manually. This applies, in particular, to the delivery of the power cable to a desired automated installation on the device. Since a power cable is a flexible part, an economical automated delivery could not be realized in the desired fashion until now if the cable is supplied in the form of bulk material. In this state, the cable ends or power plugs and cable ends are not defined and can only be taken hold of with a very high technical expenditure. This is the reason why the power cable delivery was usually carried out manually until now.

According to one known proposal for automating the cable installation, a power cable is manufactured immediately before the installation. In this case, the cable is delivered to the power cable manufacture from a roll and cut to the required length, wherein the power plug is subsequently attached and the cable is then connected to the device. Due to this special manufacturing sequence, both cable ends are always in a defined position. However, this method is not suitable for instances, in which a corresponding cable in the form of a prefabricated accessory part is additionally processed, for example, in the small electric appliance industry that does not have a separate cable manufacture at its disposal.

The present invention is based on the objective of developing an improved cable package and an improved method for installing a cable end of the initially cited type, of eliminating the disadvantages of the state of the art and of additionally developing the latter in an advantageous fashion. The automated handling of the cable to be processed should preferably be realized with justifiable costs such that the cable end can be exactly positioned and installed in a largely automated fashion on a connector such as a plug, a power supply unit, a charging device and the like.

According to the invention, this objective is attained with a cable package according to Claim 1 and a method according to Claim 22. Preferred embodiments of the invention form the objects of the dependent claims.

It is therefore proposed to utilize the cable package for positioning the cable end to be processed and to suitably design the package for this purpose such that it is not only possible to easily take hold of and precisely position the package, but also to place the cable into a defined position relative to the package container that is at least sectionally realized in a dimensionally stable fashion for this purpose. According to the invention, the cable package is characterized in that holding means for holding a cable end and/or a connector connected to the cable end in a cable processing position are provided on a wall of the package container that is at least sectionally realized in a dimensionally stable fashion. This makes it possible to move the cable end or a connector installed thereon into a defined position, for example, relative to an installation head or probe by correspondingly positioning the cable package that can be taken hold of in a much simpler and more precise fashion than a cable of undefined flexibility. In the aforementioned cable processing position, in which the cable end or a connector installed thereon is held, the cable end can be connected to said connector, preparations of the cable required for producing this connection can be carried out or the finished connection between the cable and the connector can be checked.

The cable fixed on the package container may be prepared, in particular, for being contacted with the terminals of a connector and subsequently installed on the connector. The preparations carried out prior to the actual installation of the connector may comprise, in particular, splicing of the stranded conductors of an electric cable, stripping the insulation, bending the individual stranded conductors into the respective installation position, crimping the cable, i.e., attaching a crimp-type connector, soldering the cable conductors, contact-bonding the line connections and/or casting the cable end in an insulation.

Depending on the type of connector to be installed, other preparatory steps can be carried out while the cable is advantageously arranged in the package container and held on a wall or in the vicinity of a wall with its cable end such that the cable end can be positioned by positioning the package container. The package container with the cable ends held thereon is not only advantageous for the actual installation of a connector, but also for subsequent testing steps. For example, a functional test that is usually carried out as part of the final installation can be simplified with the package container. The connector that is installed on the cable end and consists, for example, of a plug can be connected to an electric test circuit in order to check the electric conductivity while the cable is arranged in the package container and the cable end or the connector installed thereon is held in an exactly defined position on the package container by the holding means.

Functional elements arranged in other sections of the cable may be alternatively or additionally checked. For example, switches and/or measuring points on a cable section accommodated in the package container can be delivered to a test station. For this purpose, the package container may comprise other holding means that fix the cable and/or the functional component installed thereon such as, for example, the aforementioned switch in a defined position relative to the package container.

Since the flexible cable is arranged in a cable package of the above-described type, it can be cost-efficiently handled automatically in a production line with simple manipulating means such as, for example, the gripping instrument of a manipulator. Furthermore, the installed and finished cable is advantageously arranged in a package that can also be automatically handled in a secondary packaging line. Small appliances such as, for example, power supply units, switches, line filters and the like can also be packaged with two outgoing cables or plugs, on which switching processes, measurements and the like can be automatically carried out through corresponding recesses in the package container. The positions of switches and measuring points are defined by the package container in this constellation. In contrast to loose cables, the package also makes it possible to automatically identify the cable and/or a device installed thereon based on relevant information such as, for example, batch numbers, test results or material numbers.

In one additional development of the invention, the cable package is characterized in that the wall, on which the aforementioned holding means are provided, and/or another wall of the package container features a cable through-opening such that the cable can extend through the wall and, in particular, from an inner side of the package container to an outer side. In this case, the holding means are advantageously realized in such a way that the cable end and/or the connector connected thereto is positioned on an outer side of the package container. This makes it possible to also carry out the cable installation, testing and/or processing while the package container is closed and to simply gain access to the cable and/or the connector installed thereon from an outer side. It would also be possible, in principle, to hold the cable end in a predefined position on an inner side of the package container with the aforementioned holding means and to carry out the above-described installation, testing and processing steps in the interior of the package container. However, the arrangement of the processing position on an outer side of the package container such that the cable extends through the wall makes it easier to gain access with corresponding installation tools. Furthermore, the package does not have to be opened in order to process the cable, i.e., the processing can be carried out while the package remains closed such that the attachment of the package can be separated from the additional processing and the cable can be transported between these steps in a particularly simple fashion.

The aforementioned cable through-opening may, in principle, be realized in different ways, for example, in the form of a bore. According to an additional development of the invention, however, the cable through-opening advantageously forms a clamping groove that is open toward one side of the respective wall and into which the cable to be positioned can be simply inserted transverse to its longitudinal direction. This eliminates threading of the cable that may be quite cumbersome depending on the size of the through-opening and also significantly simplifies the attachment of the package.

The holding means may be arranged, in principle, at a distance from the aforementioned through-openings, but are preferably provided at least in the vicinity of said through-opening. In one particularly advantageous additional development of the invention, the holding means are integrated into the aforementioned through-opening or are formed by this through-opening, respectively.

The holding means may be designed in different ways. In order to ensure that the cable is held in a stable fashion and the package can be easily attached, it would be possible to provide form-fitting holding means, preferably in the form of elastic clips and/or snap-in means, into which the cable and/or the connector installed thereon can be respectively clipped or snapped. In one particularly advantageous additional development of the invention, the holding means are realized in a clamping fashion and feature corresponding clamping means, preferably in the form of a clamping groove for clamping the cable in the respective cable processing position. In an additional development of the invention, said clamping groove may form part of the aforementioned cable through-opening that, in turn, at least sectionally forms a laterally tapered clamping slot, into which the cable to be positioned merely needs to be inserted transverse to its longitudinal direction in order to be clamped and held in position. At its base, the clear width of said clamping groove is preferably adapted to the cable diameter in such a way that a cable sheath is held in position with a press fit and cannot slip or pull out, namely while simultaneously preventing damages thereto.

Depending on the processing steps to be carried out on the cable, the cable end or the connector installed thereon may be held in different alignments relative to the package container. With respect to the installation of a connector and, in particular, the aforementioned pre-processing steps, it is particularly advantageous if the holding means are realized in accordance with an additional development of the invention, in which the cable end is positioned such that it protrudes from the wall, particularly held such that it approximately projects from the wall of the package container perpendicularly. In this case, the processing position is preferably chosen such that the cable end or the connector installed thereon is exposed on all sides and spaced apart from other container walls in order to freely access the cable end from all sides.

According to one advantageous additional development of the invention, the cable end can be pulled out of the package container by a certain distance prior to or during the installation of the connector or the preparation of the cable for this installation in order to simplify the processing of the cable end. This may be realized, for example, by pulling out the cable end that slides through the holding means by a certain distance while the package container is held by the holding device. Alternatively or additionally, the package container may advantageously feature two parts that can be moved relative to one another, preferably such that they are displaceably guided on one another, wherein the cable end can be pulled out by the aforementioned distance by displacing the two parts relative to one another and, after the installation of the connector, reinserted together with the installed connector by displacing the container parts back into their original position.

In order to realize a simple storage and a simple transport of the pre-configured cables, an advantageous additional development of the invention proposes that the package container is realized in a stackable fashion. To this end, the package container may feature at least one preferably plane stacking surface that is positioned and arranged such that it can be securely placed on another identically designed package container.

The package container has, in particular, an essentially plane bottom that may, if applicable, feature projecting leg areas in order to also securely stand on crumbly surfaces and to realize the removal from a completely smooth surface without suction.

In one advantageous embodiment of the invention, the package container is essentially realized cubically, wherein the package container according to one additional development of the invention comprises a trough-shaped base body that features the aforementioned holding means and/or the aforementioned through-opening for the cable end or the connector installed thereon on one of its side walls, and wherein said side wall advantageously consists of a face wall that adjoins the bottom of the package container.

In an additional development of the invention, the aforementioned trough-shaped base body may form an inner body of the package container that is displaceably accommodated in an outer body that preferably is also realized about cubically similar to a matchbox, wherein the outer body is realized open on the side, on which the cable end is held on the inner body, so as to be able to take hold of and, if applicable, pull out the cable end by a certain distance. The latter can be advantageously realized by or during a displacement of the inner body relative to the outer body.

In order to prevent the projecting cable ends or projecting connectors from interfering with the stacking of the cable packages, an advantageous additional development of the invention proposes that the wall, on the outer side of which the cable end or the connector installed thereon is held in the aforementioned cable processing position, is set back relative to the other adjoining walls of the package container such that the cable end or the connector projecting from the wall is practically concealed under the cover formed by the other protruding container walls. The wall with the cable positioned on the outer side thereof may, in particular, be set back relative to the adjoining container walls in such a way that said walls define a cable receptacle recess, in which the cable end and/or the connector installed thereon can be positioned.

Simple processing and an intuitive recognition of the function can be achieved in that said cable receptacle recess is realized such that it is open and/or only partially closed toward at least one side and the cable end lying in the cable receptacle recess remains visible and preferably also accessible.

If a displaceable inner body is provided, the outer body of the package container may be realized longer than the inner body such that the corresponding projection of the outer body defines the aforementioned receptacle recess.

The package container itself may, in principle, be realized in different ways. One simple, inexpensive and environmentally compatible solution consists of realizing the package container in the form of a folding box.

Alternatively, the package container may also be realized in the form of a dimensionally stable moulded plastic part. For example, the package container may consist of a deep-drawn part, an injection-moulded part or even a moulded EPS part. The design in the form of a moulded plastic part provides the advantage of making it possible to realize more or less arbitrarily shaped package contours. It is also easily possible, in particular, to integrally mould special gripper contact surfaces, for example, in the form of depressions or projections such that the cable package can be taken hold of accurately with respect to reference points.

These and other characteristics may form the object of the present invention individually or jointly regardless of their combination in the claims and are elucidated below in the following description of preferred embodiments that refers to the drawings and/or illustrated in the drawings. In these drawings:
- Figure 1: shows a schematic perspective representation of a cable package according to one advantageous embodiment of the invention that comprises a package container in the form of a folding box, wherein a cable end to be processed projects from the face of said package container;
- Figure 2: shows a schematic perspective representation of a cable package according to another advantageous embodiment of the invention that comprises a package container in the form of a moulded EPS part, wherein a cable end to be processed projects from the face of said package container;
- Figure 3: shows a schematic perspective representation of a cable package according to another advantageous embodiment of the invention that comprises a package container in the form of a deep-drawn part, wherein a cable end to be processed projects from the face of said package container;

- Figure 4: shows a schematic perspective representation of a cable package according to another advantageous embodiment of the invention that comprises a package container in the form of an injection-moulded part, wherein a cable end to be processed projects from the face of said package container;
- Figure 5: shows a sectional perspective representation of the face of a package container according to one advantageous embodiment of the invention, in which the container wall with the cable end protruding therefrom is set back relative to the adjacent container walls such that the cable end is recessed in a cable receptacle recess, but still accessible from outside;
- Figure 6: shows a sectional perspective representation of the face of the package container according to Figure 5, wherein a connector that is realized in the form of a plug and installed on the cable end is positioned in the receptacle recess instead of the cable end;
- Figure 7: shows a sectional perspective representation of the face of the package container according to Figure 5, wherein a connector that is realized in the form of a charging device for an electric toothbrush and installed on the cable end is positioned in the receptacle recess instead of the cable end;

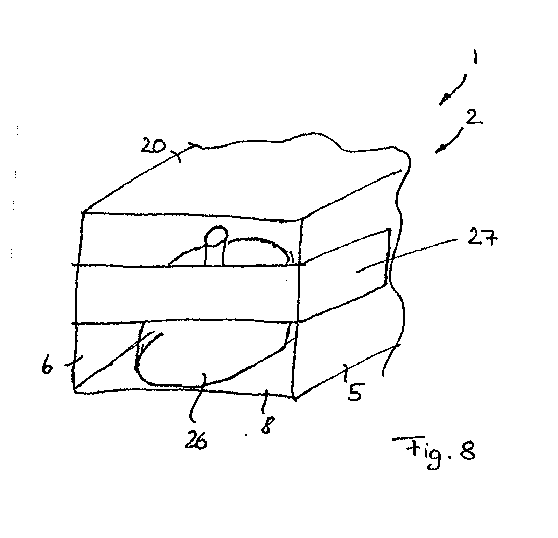

- Figure 8: shows the cable receptacle recess of the package container according to Figure 7, wherein said cable receptacle recess is partially closed by a package band;
- Figure 9: shows the receptacle recess of the package container according to Figures 7 and 8, wherein snap-in means for snapping in the accommodated connector are provided on one of the adjoining walls;
- Figure 10: shows a schematic perspective representation of the cable package according to Figure 1 during the installation of the connector on the cable end, wherein the package container is taken hold of by the gripping instrument of a manipulating device and the cable end is processed by an installation head, and
- Figure 11: shows a schematic representation of a cable package during different installation steps according to another advantageous embodiment of the invention, in which the package container comprises an outer body and an inner body that is displaceably accommodated therein, wherein the cable is accommodated in this inner body and the cable end to be processed leads out of the inner body on the face thereof.

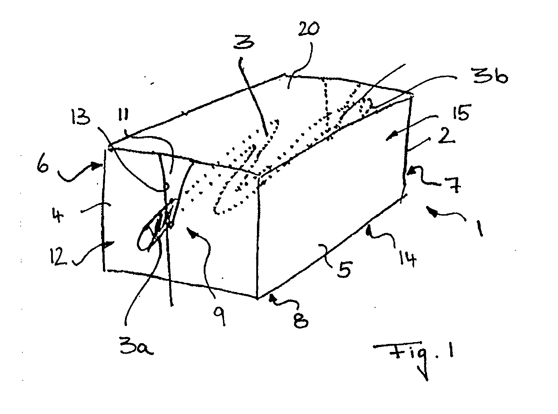

According to Figure 1, the cable package 1 may be realized in the form of a folding box that comprises an essentially cubical package container 2 with a trough-shaped base body 15 that can be closed with a cover 20. This cover 20 is preferably connected to the aforementioned trough-shaped base body 15 on one side by means of a fold such that the cover 20 can be folded over in order to close the open upper side of the base body 15 and locked, for example, with a push-in clip. If the package container 2 is realized in the form of a folding box, the package container 2 is conventionally produced from a suitable blank that is folded accordingly and, if applicable, connected by means of bonding, clamps or other folded edge connections.

According to Figure 1, the package container 2 features two cable through-openings 11 that are realized in the form of slot-shaped clamping grooves 13 on opposite walls 4 and 7 that form the face walls of the trough-shaped base body 15 and adjoin the bottom 8 thereof. In this case, the clamping grooves 13 are open toward the open upper side of the base body 15 and their cross section or clear width is tapered from the open side toward its base. In the embodiment shown in Figure 1, the aforementioned clamping grooves 13 have an essentially V-shaped contour, wherein the end of the clamping groove 13 is arranged about centrally referred to the face walls 4 and 7 such that the cable 3 is positioned centrally with its projecting cable ends 3a and 3b.

In this case, the aforementioned trough-shaped base body 15 of the package container 2 forms a receptacle space, in which the cable 3 can be accommodated in a meander-shaped or, if applicable, coiled fashion. According to Figure 1, only the cable ends 3a and 3b project from the face walls 4 and 7 of the package container 2 through the aforementioned cable through-openings 11.

The tapered contour of the clamping grooves 13 forms holding means 9 for holding the cable ends 3a and 3b in a defined position relative to the cubical body of the cable package 1.

In order to install a connector 10, for example, in the form of a plug on the cable 3 or on the ends 3a and 3b of the cable 3, respectively, one may proceed as described below: initially, the cable 3 is placed into the interior of the package container 3. The cable ends 3a and 3b are then pressed into the clamping grooves 13 of the cable through-openings 11 transverse to the longitudinal direction of the cable from the open side until they lie on the bottom of the clamping grooves. The clamping grooves 13 have such dimensions that the cable ends 3a and 3b are held in position by means of a press fit. The package container 3 can subsequently be closed by folding over the cover 20.

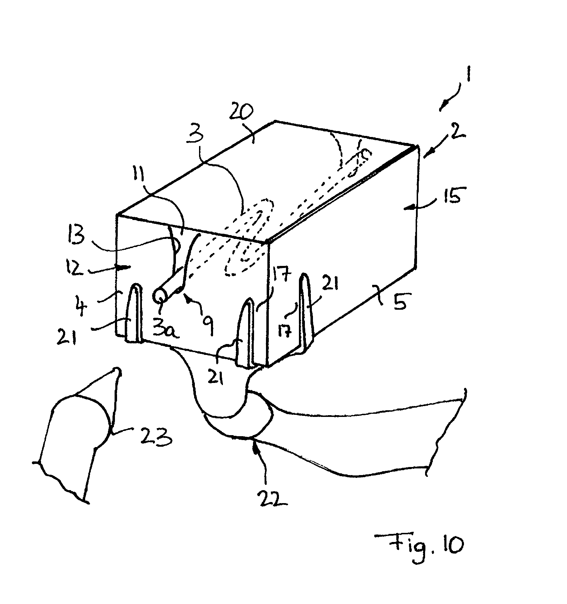

According to Figure 10, the package container 2 is then taken hold of by the gripping instrument or the attached grippers 21 of a manipulator or manipulating device 22 that forms part of an automated installation station, wherein the sidewalls 4, 5, 6 and 7, as well as the bottom 8 of the package container 2, form gripper contact surfaces 17, relative to which the cable ends 3a and 3b are exactly positioned. If applicable, the package container 2 may also feature reference points in the form of recesses or projections.

The cable 3 that is arranged in the package container 2 and held by the holding means 9 at the cable ends 3a and 3b is exactly positioned relative to the processing head 23 of an installation station by means of the cable package. Said processing head 23 may carry out the initially described installation, pre-processing, checking or testing steps such as, for example, splicing, crimping, soldering and attaching the connector 10.

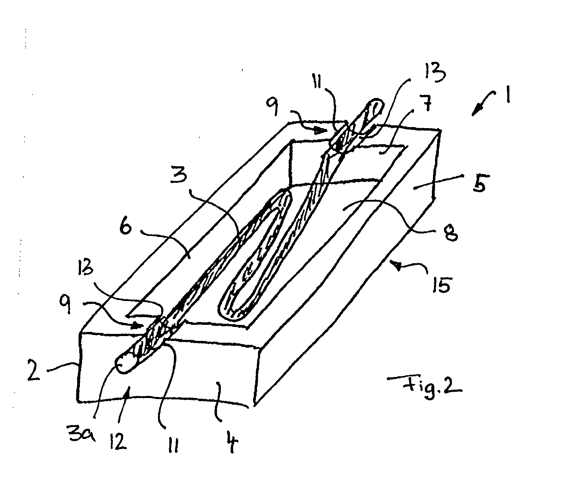

According to Figure 2, the package container 2 may also be realized in the form of a moulded plastic part, wherein Figure 2 shows a moulded EPS part that also comprises a trough-shaped base body 15, in the face walls 4 and 7 of which cable through-openings 11 in the form of grooves that are open toward one side or shell-shaped openings are provided similar to the above-described embodiment in order to exactly position the cable ends 3a and 3b. In this case, said cable through-openings 11 are arranged such that the inserted cable end 3a or 3b is clamped in position by closing the open upper side of the base body 15, for example, with a not-shown cover or with a gripping tool that is attached to the upper side of the base body 15.

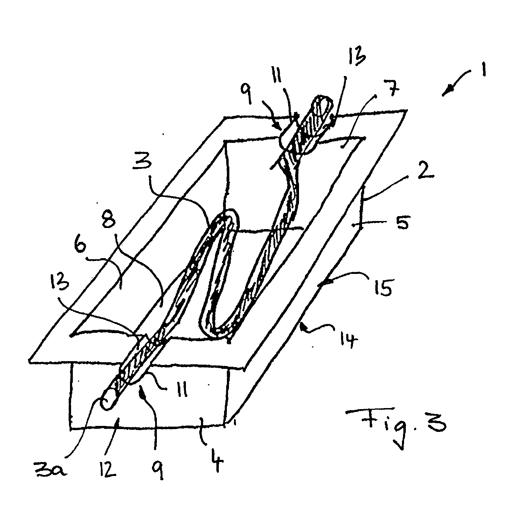

Figure 3 shows an embodiment of the package container 2 that is basically realized similar to the embodiment according to Figure 2, wherein the package container 2 is realized, however, in the form of a plastic part or even a metallic deep-drawn part. Said deep-drawn part also comprises a trough-shaped base body 15 that features angled and/or protruding flange-like webs that are realized peripherally and protrude transverse to the side walls 4, 5, 6 and 7. One respective cable through-opening 11 in the form of a groove that is open toward the top is provided on opposite face walls 4 and 7 in the above-described fashion, wherein said cable through-openings may have the shape of a shell or, if applicable, be realized in the form of a tapered clamping groove as illustrated in Figure 1.

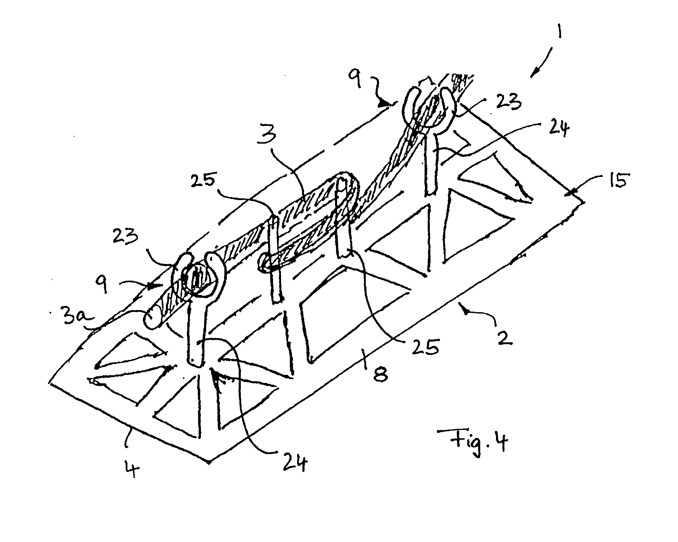

According to Figure 4, the package container 2 may also be realized in the form of an injection-moulded plastic part, wherein the embodiment illustrated in Figure 4 is provided with holding means 9 in the form of holding forks or holding clips with elastic clamping limbs, between which the cable 3 can be inserted and clamped by elastically snapping the cable into the respective holding means or by compressing the limbs in a plastic fashion. According to Figure 4, the holding means 9 are arranged on rod-shaped carrier sections 24 that are arranged such that they project relative to the base body 15 of the package container 2 and are fixed thereon. Between the aforementioned holding means 9, the package body features a wind-up device in the form of two winding rods 25 that are spaced apart from one another and around which the cable 3 can be wound.

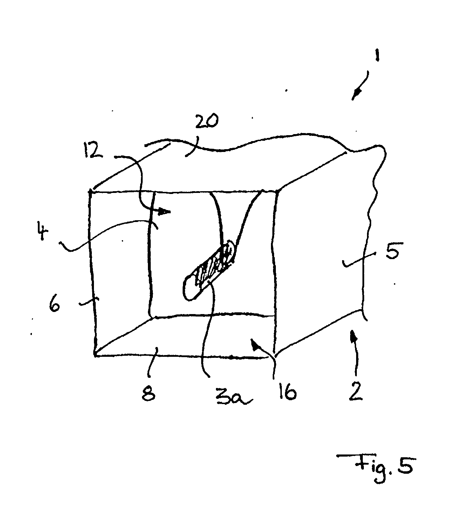

In order to simply stack the package containers 2 without interference from the projecting cable ends, the wall 4 or 7 of the package container 2, through which the respective cable 3a or 3b extends and from which said cable end 3a and 3b projects, may be set back relative to the adjoining walls of the package container 2 as shown in Figure 5. In other words, the adjoining walls may protrude over the wall 4 holding the cable 3 such that the aforementioned projecting walls form a cable receptacle recess 16, in which the cable end 3a or 3b is practically concealed, together with the outer side of the wall holding the cable. Irrespective of the projecting cable end 3, the protruding walls define a stacking contour that significantly simplifies the stacking of the cable packages 1. In the embodiment illustrated in Figure 5, all adjoining walls are realized in a protruding fashion, i.e., the bottom 8, the two sidewalls 5 and 6 and the cover 20. If applicable, it may already suffice to realize only one or two of the aforementioned walls in a protruding fashion, for example, the two opposite side walls 5 and 6. The wall 4 holding the cable 3 preferably is set back at least as far as the cable end 3a projects from said wall 4.

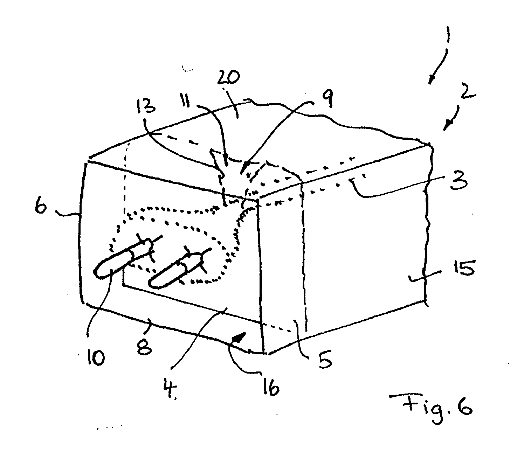

According to Figure 6, the aforementioned cable receptacle recess 16 not only can accommodate the cable end 3 itself, but also a connector 10 installed thereon that may be realized in the form of a plug as shown in Figure 6. Figure 6 also shows that, if applicable, the connector 10 installed on the cable may be held on the holding means 9 of the cable package 1 instead of the cable 3 itself. In the embodiment illustrated in Figure 6, the connector 10 is clamped into the clamping groove 13 of the cable through-opening 11.

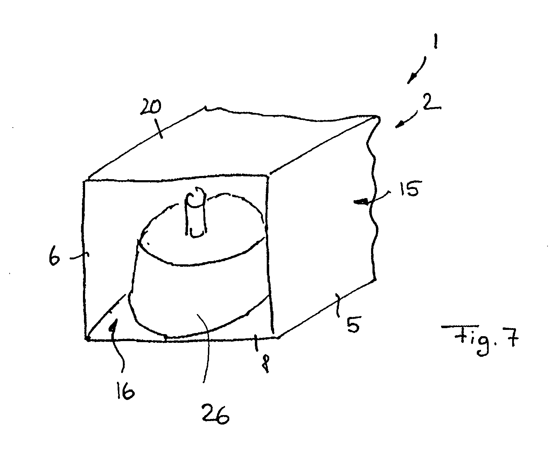

According to Figure 7, the cable receptacle recess 16 may also accommodate a charging device 26, for example, for an electric toothbrush that is connected to the cable 3 accommodated in the interior of the package container 2.

The cable receptacle recess 16 may be entirely or partially closed, for example, with a package band 27, wherein it would also be possible to utilize, if applicable, a locking clip formed on one of the walls 5 or 6 instead of a package band 27.

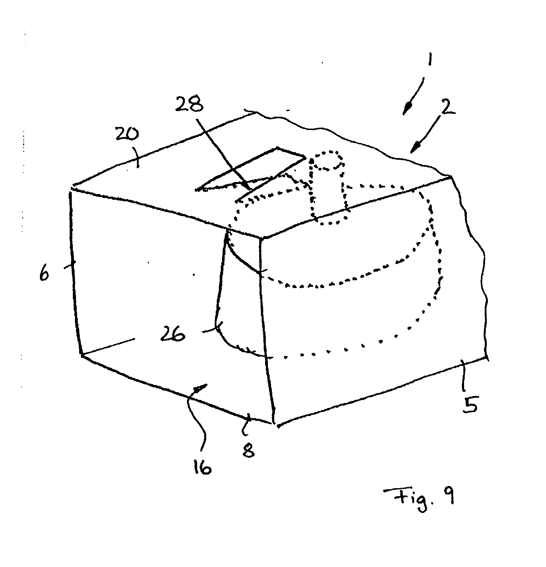

According to Figure 9, a form-fitting holding element, preferably in the form of a snap-in device 28, may be provided in the region of the cable receptacle recess 16, namely in one of the walls that define this cable receptacle recess, in order to fix the connector 10 installed on the cable end 3a on the cable package 1. The embodiment shown in Figure 9 features a snap-in device 28 with a locking clip that is assigned to a through-opening. A section of the connector 10 is threaded through said opening and fixed with the locking clip.

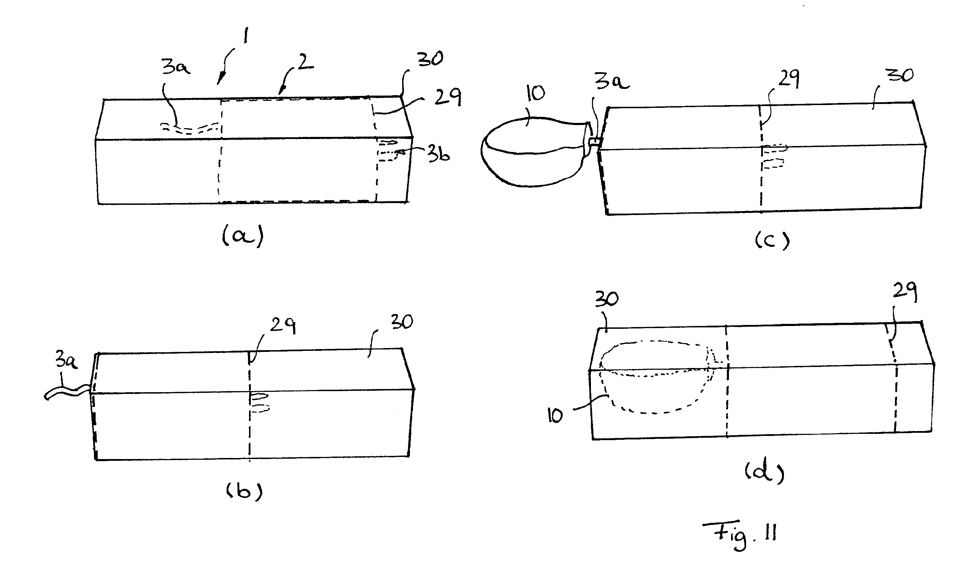

According to Figure 11, the cable package 1 may also comprise an outer body 30 and an inner body 29 that is displaceably accommodated therein similar to a matchbox. The outer body and the inner body may be advantageously realized in the form of extruded profiles, preferably of cubical shape, such that the inner body 29 is displaceably guided in the outer body 30. In this case, the cable 3 is accommodated in the inner body 29 and held on opposite face walls of the inner body 29 with its cable ends 3a and 3b in the above-described fashion.

The outer body 30 is realized longer than the inner body 29 and advantageously realized open on the sides of the cable ends 3a and 3b so as to make it possible to take hold of the cable ends. If applicable, the outer body may also be realized open on one side only, namely depending on whether both cable ends 3a and 3b need to be installed or only one cable end. Due to the projection of the outer body 30, receptacle recesses 16 that are surrounded by the outer body 30 are formed on the face ends of the inner body, namely at the locations, at which the cable ends 3a and 3b emerge. Due to this measure, clearly defined and, in particular, regular and stackable outside contours without interfering projecting cables are achieved.

A comparison between the four partial illustrations a to d of Figure 11 shows that the cable end 3a protruding from the inner body 29 is accommodated within the outer body in the delivery state according to Figure 11 a. In order to respectively simplify the installation and the aforementioned pre-processing of the cable end, the cable end 3a according to Figure 11b is pulled out of the package container 2 by a certain distance, wherein the inner body 29, on which the cable end 3a is held, can be displaced in the outer body 30 toward the open face thereof for this purpose.

In this pulled-out position, the connector 10 that, according to Figure 11, may consist of a charging device or a power supply unit of a small electric appliance is then installed on the cable end in the described fashion.

According to Figure 11d, the connector 10 is, after its installation, pushed back into the inner body 29 together with the cable 3 accommodated therein by displacing the inner body 29 back into the outer body of the package container 2 such that the connector 10 is quasi concealed in the receptacle recess 16 formed in the projection of the outer body 30.

According to Figure 11, the other cable end 3b may lead out of the inner body 29 on the opposite side of the inner body 29 with a power plug that may be correspondingly installed previously or subsequently. In this case, the surface of the outer body may advantageously feature an access opening 31 that is preferably arranged such that the power plug can be contacted through the outer body 30 in the installation position of the inner body 29 in order to check the installed cable unit; see Figures 11b and 11c.

The described and illustrated cable package may, in principle, be used with all types of cables, wherein special advantages manifest themselves with cables that need to be connected to a plug and/or a device or a different connector. These cables may consist, for example, of cables for non-heating appliances with a plug on both sides such as, for example, for charging devices, in which the cable is permanently connected to the charging device on one end and to a plug on the other end. It would also be conceivable to utilize the cable package for all electric appliances that feature a permanently connected cable with a plug such as, for example, computer mice, keyboards, hand-held blenders or coffee machines, as well as for connecting cables of all types that feature a plug on one or both ends.

## Claims

1. A cable package with a package container (2) that serves for accommodating a cable (3) to be packaged and is at least sectionally realized in a dimensionally stable fashion, **characterized in that** holding means (9) for holding a cable end (3a) and/or a connector (10) connected to the cable end (3a) in a cable processing position are provided on a wall (4) of the package container (2).

2. The cable package according to the preceding claim, wherein the aforementioned wall or another wall (4) features a cable through-opening (11) and the holding means (9) are realized in such a way that the cable end (3a) and/or the connector (10) installed thereon is positioned in the cable processing positioned on an outer side (12) of the package receptacle (2).

3. The cable package according to the preceding claim, wherein the cable through-opening (11) forms a clamping groove that is open toward one side of the wall (4).

4. The cable package according to one of the two preceding claims, wherein the holding means (9) are formed by the cable through-opening (11) and/or integrated into said cable through-opening (11).

5. The cable package according to one of the preceding claims, wherein the holding means (9) feature clamping means, preferably in the form of a clamping groove (13) for clamping the cable (3) in a predetermined cable processing position.

6. The cable package according to Claim 2 or a claim referring thereto, wherein the cable through-opening (11) forms a clamping groove (13) that is tapered toward one side.

7. The cable package according to one of the preceding claims, wherein the holding means (9) are realized in such a way that the cable end (3a) essentially protrudes from the wall (4) of the package receptacle (2) and/or projects from the wall (4) of the package receptacle (2) perpendicularly.

8. The cable package according to one of the preceding claims, wherein the package receptacle (2) is realized in a stackable fashion and/or features at least one stacking surface (14) for being stacked on another identically designed package receptacle.

9. The cable package according to one of the preceding claims, wherein the package receptacle (2) features an essentially plane bottom (8).

10. The cable package according to one of the preceding claims, wherein the package receptacle (2) has an essentially cubical contour.

11. The cable package according to one of the preceding claims, wherein the package receptacle comprises a trough-shaped base body (15) that features the holding means (9) on one of its side walls (4).

12. The cable package according to one of the preceding claims, wherein the wall (4) with the cable processing position situated on the outer side thereof is set back relative to at least one other adjoining wall (5, 6) of the package receptacle (2) such that said walls (4; 5, 6) define a cable receptacle recess (16).

13. The cable package according to the preceding claim, wherein the cable receptacle recess (16) is open toward at least one side.

14. The cable package according to one of the preceding claims, wherein the package receptacle (2) is realized in the form of a folding box.

15. The cable package according to one of Claims 1 to 13, wherein the package receptacle (2) is realized in the form of a dimensionally stable moulded plastic part, preferably in the form of a deep-drawn part, an injection-moulded part or a moulded EPS part.

16. The cable package according to one of the preceding claims, wherein the package container (2) features an inner body (29) that preferably has an essentially cubical shape and an outer body (30) that preferably also has an essentially cubical shape and is open on at least one side, wherein the inner body (29) is accommodated in the outer body (30), preferably in a displaceable fashion, and features the holding means (9) on a side wall that faces the open side of the outer body.

17. The cable package according to the preceding claim in connection with Claim 12, wherein the outer body (30) projects over the inner body (29) in the direction of a principal axis of the outer body (30), preferably in the direction of an axis of displacement of the inner body (29), and wherein said projection forms the cable receptacle recess.

18. The cable package according to one of the preceding claims, wherein two holding means (9) for both cable ends (3a, 3b) and/or connectors (10) installed on the cable ends (3a, 3b) are provided on different walls of the package receptacle (2), preferably on opposite walls (4, 7).

19. The cable package according to one of the preceding claims, containing a preferably flexible cable (3) in a package receptacle (2).

20. The cable package according to the preceding claim, wherein the cable (3) extends through one wall (4) of the package receptacle with one cable end (3a) and is preferably positioned such that it projects from the wall (4) on the outer side of said wall (4).

21. The cable package according to one of the preceding claims, wherein the package receptacle (2) features gripper contact surfaces (17) in predetermined positions relative to the holding means (9) in order to take hold of the cable package in a mechanized fashion.

22. A method for installing a cable end (3a) on a connector (10) such as a plug, a power supply unit and the like with the aid of a cable package (1) according to one of the preceding claims, wherein the cable (3) is placed into the package receptacle (2) and fixed on the holding means (9) with one cable end (3a), wherein the package receptacle (2) with the cable (3) accommodated therein is held in a predetermined installation position by a manipulating device (18), and wherein the connector (10) is subsequently installed on the cable end (3a) and/or the cable end (3a) is prepared and preprocessed for the installation of the connector (10).

23. The method according to the preceding claim, wherein the cable end (3a) is pulled out of the package container by a certain distance prior to and/or during the installation of the connector (10) and/or the preparation for installing the connector (10).

24. The method according to the preceding claim, wherein the manipulating device (18) holds an outer body (30) of the package container (2) and the cable (3) is arranged in an inner body of the package container (2) that is displaceably accommodated in the outer body (30) and pulled out by a certain distance by displacing the inner body (29) relative to the outer body (30).

25. The method according to the preceding claim, wherein the inner body (29) is pushed back after the installation of the connector (10) on the cable end (3a) and the connector (10) is pushed into the outer body (30).

26. The method according to one of Claims 22 to 25, wherein the cable end (3a) is automatically spliced, provided with a crimp-type connector, soldered and/or contact-bonded by an installation device (19) while it is held on the package receptacle (2).
